(19) Europäisches Patentamt
European Patent Office
Office européen des brevets

(11) Veröffentlichungsnummer: **0 021 390**
**A2**

(12) **EUROPÄISCHE PATENTANMELDUNG**

(21) Anmeldenummer: **80103519.7**

(22) Anmeldetag: **24.06.80**

(51) Int. Cl.³: **A 01 N 57/30**
// (A01N57/30, 57/16, 57/14, 57/12, 47/22)

(30) Priorität: **02.07.79 DE 2926702**

(43) Veröffentlichungstag der Anmeldung: **07.01.81**
**Patentblatt 81/1**

(84) Benannte Vertragsstaaten: **BE CH DE FR GB IT LI NL**

(71) Anmelder: **BAYER AG, Zentralbereich Patente, Marken und Lizenzen, D-5090 Leverkusen 1, Bayerwerk (DE)**

(72) Erfinder: **Hammann, Ingeborg, Dr., Belfortstrasse 8, D-5000 Köln (DE)**
Erfinder: **Schrader, Gerhard, Dr., Kohlfurther Strasse 75, D-5600 Wuppertal-12 (DE)**

(54) **Amido-thiono-phosphorsäure-phenylester enthaltende Schädlingsbekämpfungsmittel, ihre Herstellung und Verwendung.**

(57) Die Erfindung betrifft neue Schädlingsbekämpfungsmittel, welche aus einer Wirkstoffkombination aus Amidothionophosphorsäure-phenylestern der Formel I

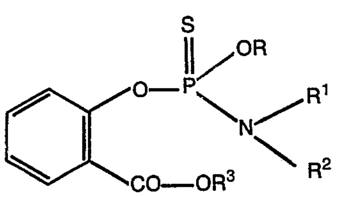

in welcher R, $R^1$, $R^2$ und $R^3$ die in der Beschreibung angegebene Bedeutung haben, und anderen bekannten pestiziden Wirkstoffen bestehen und welche eine hervorragende pestizide, insbesondere insektizide und akarizide Wirkung aufweisen.

EP 0 021 390 A2

BEZEICHNUNG GEÄNDERT siehe Titelseite
0021390



BAYER AKTIENGESELLSCHAFT
Zentralbereich
Patente, Marken und Lizenzen

5090 Leverkusen, Bayerwerk

Ad/AB-c
Typ III

Schädlingsbekämpfungsmittel

Die Erfindung betrifft neue pestizide synergistische Wirkstoffkombinationen aus bekannten Amido-thiono-phosphorsäure-phenylestern und anderen bekannten pestiziden Wirkstoffen.

Es ist bekannt, daß bestimmte Amido-thiono-phosphorsäure-phenylester, wie z.B. O-Ethyl-O-(2-iso-propoxy-carbonyl-phenyl)-N-iso-propyl-thionophosphorsäure-esteramid und O-Methyl-O-(2-iso-propoxy-carbonyl-phenyl)-thiono-phosphorsäure-esteramid, insektizid und akarizid wirksam sind (vergleiche die DE-OS 1 668 047). Die Wirkung dieser Verbindungen ist jedoch, insbesondere bei niedrigen Wirkstoffkonzentrationen und Aufwandmengen, nicht immer zufriedenstellend.

Weiter ist bekannt, daß bestimmte Carbaminsäureester, wie z.B. N-Methyl-O-(2-iso-propoxy-phenyl)-carbaminsäureester und N-Methyl-O-(3-methyl-4-dimethylamino-phenyl)-carbaminsäureester, sowie Phosphorsäureester, wie z.B. O,O-Dimethyl-O-(4-nitro-phenyl)-thionophosphorsäureester, O,O-Dimethyl-O-(3-methyl-4-nitro-phenyl)-thionophosphorsäureester, O,O-Dimethyl-S-(3,4-dihydro-4-oxo-1,2,3-benzotriazin-3-yl-methyl)-dithiophosphorsäureester, O,O-Dimethyl-S-(2-ethylthio-ethyl)-thiolphosphor-



BAD ORIGINAL

säureester und O,O-Dimethyl-S-(methylamino-carbonyl-methyl)-thiolphosphorsäureester pestizide Eigenschaften besitzen.

Die mit solchen Wirkstoffen bekämpften tierischen Schädlinge sind allerdings im Laufe der Jahre gegen diese Mittel zunehmend resistent geworden. Dadurch kann eine einigermaßen befriedigende Schädlingskontrolle nur durch einen immer höheren Mengenaufwand - bei Verwendung dieser konventionellen Pestizide - gewährleistet werden.

Es wurde nun gefunden, daß neue Schädlingsbekämpfungsmittel enthaltend eine Wirkstoffkombination aus Amido-thiono-phosphorsäure-phenylestern der Formel I

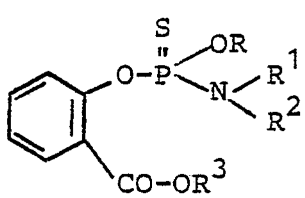

(I)

in welcher

R für Alkyl steht,

$R^1$ und $R^2$ gleich oder verschieden sind und einzeln für Wasserstoff oder Alkyl stehen, und

$R^3$ für Alkyl oder Cycloalkyl steht,

und anderen bekannten pestiziden Wirkstoffen eine hervorragende pestizide, insbesondere insektizide und akarizide Wirkung aufweisen.

Bevorzugt sind Wirkstoffkombinationen aus Amido-thiono-phosphorsäure-phenylestern der Formel (I), und Carbaminsäureestern und/oder Phosphorsäureestern bzw. Phosphonsäureestern.

Besonders bevorzugt sind Wirkstoffkombinationen aus Verbindungen der Formel (I) und

A) Carbaminsäureestern der Formel II

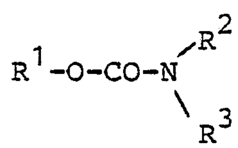 (II)

in welcher

$R^1$ für Aryl, einen heterocyclischen Rest oder für einen Oximrest steht, welche gegebenenfalls substituiert sind,

$R^2$ für Wasserstoff oder einen Alkylrest mit 1 bis 4 Kohlenstoffatomen steht und

$R^3$ für Alkyl, Alkylcarbonyl mit 1 bis 6 Kohlenstoffatomen im Alkylrest, der gegebenenfalls durch Hydroxy oder Methylthio substituiert ist, oder den Rest -S-Z steht, wobei

Z für einen gegebenenfalls durch Halogen substituierten aliphatischen Rest mit 1 bis 4 Kohlenstoffatomen, insbesondere für $CCl_3$ und $CF_3$ sowie für gegebenenfalls durch Cyano, Halogen, Methyl, Trihalogenmethyl, Trifluormethylthio oder Nitro substituierten Arylrest, insbesondere Phenyl, oder

für Methoxycarbonyl oder für den Rest $-W-SO_2-\underset{R^2}{N}-$ steht, wobei

W für Alkyl, Halogenalkyl oder Alkylamino, Dialkylamino oder einen gegebenenfalls durch Halogen, Trihalogenmethyl, Nitril, Methyl oder Nitro substituierten Arylrest steht, und/oder

B) Phosphorsäureestern bzw. Phosphonsäureestern der Formel III

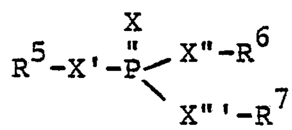

(III)

in welcher

X, X' und X" unabhängig von einander für Sauerstoff oder Schwefel stehen,

X"' für Sauerstoff, Schwefel oder eine direkte Bindung zwischen dem zentralen Phosphoratom und $R^7$ steht,

$R^5$ und $R^6$ gleich oder verschieden sind und einzeln für gegebenenfalls substituiertes Alkyl oder Aryl stehen, und

$R^7$ für gegebenenfalls substituiertes Aryl, Alkyl, Heteroaryl, Aralkyl, Alkenyl, für einen Oximrest oder für den gleichen Rest, an den es gebunden ist, steht.

Als Wirkstoffkomponenten ganz besonders bevorzugt sind Carbaminsäureester der Formel (II), in welcher

$R^1$ für gegebenenfalls durch $C_1$-$C_4$-Alkyl, $C_1$-$C_4$-Alkoxy, $C_1$-$C_4$-Alkoxy-methyl, $C_1$-$C_4$-Alkylthio, $C_1$-$C_4$-Alkylthio-methyl, $C_1$-$C_4$-Alkylamino, Di-($C_1$-$C_4$-alkyl)-amino und/oder Halogen substituiertes Phenyl, Naphthyl, 2,3-Dihydrobenzofuranyl, Methylendioxyphenyl, Dioxolanyl-phenyl, Pyrazolyl oder Pyrimidinyl steht.

Als Beispiele für die Carbaminsäureester der Formel (II) seien genannt:

2-Methyl-phenyl-, 2-Ethyl-phenyl-, 2-n-Propyl-phenyl-, 2-Methoxy-phenyl-, 2-Ethoxy-phenyl-, 2-iso-Propoxy-phenyl-, 4-Methyl-phenyl-, 4-Ethyl-phenyl-, 4-n-Propyl-phenyl-, 4-Methoxy-phenyl-, 4-Ethoxy-phenyl-, 4-n-Propoxy-phenyl-, 3,4,5-Trimethyl-phenyl-, 3,5-Dimethyl-4-methylthio-phenyl-, 3-Methyl-4-dimethylamino-phenyl-, 2-(Ethylthio-methyl)-phenyl-, 1-Naphthyl-, 2,3-Dihydro-2,2-dimethyl-7-benzofuranyl-, 2-(1,3-Dioxolan-2-yl)-phenyl- und 2,3-(Dimethylmethylendioxy)-phenyl-N-methyl-carbaminsäureester.

Als Wirkstoffkomponenten aus der Phosphorsäureester- bzw. Phosphonsäureestergruppe ganz besonders bevorzugt sind Phosphorsäureester bzw. Phosphonsäureester der Formel (III), in welcher

$R^5$ und $R^6$ gleich oder verschieden sind und für $C_1$-$C_4$-Alkyl oder Phenyl stehen, und

$R^7$ für gegebenenfalls durch Halogen, Cyano, Nitro, Hydroxy, $C_1$-$C_4$-Alkoxy, $C_1$-$C_4$-Alkylthio, $C_1$-$C_4$-Alkylsulfinyl, $C_1$-$C_4$-Alkylsulfonyl, $C_1$-$C_4$-Alkylamino, Di-($C_1$-$C_4$-Alkyl)-amino, $C_1$-$C_4$-Alkylcarbonyl, $C_1$-$C_4$-Alkoxy-carbonyl, $C_1$-$C_4$-Alkyl-amino-carbonyl, Di-($C_1$-$C_4$-alkyl)-amino-carbonyl und/oder durch gegebenenfalls halogen-substituiertes Phenyl substituiertes $C_1$-$C_4$-Alkyl, $C_2$-$C_4$-Alkenyl, Phenyl, Pyridinyl, Pyrimidinyl, Pyrazolyl, Benzo-oxo-triazinyl, Cumarinyl, Chinoxalyl oder (Phenyl-cyano-methyliden)-imino steht.

Als Beispiele für die Phosphorsäureester bzw. Phosphonsäureester der Formel (III) seien genannt:

O,O-Dimethyl-O-(2,2-dichlor-vinyl)-phosphorsäureester,
O,O-Dimethyl- und O,O-Diethyl-O-(4-nitro-phenyl)-thionophosphorsäureester,
O,O-Dimethyl-O-(3-methyl-4-nitro-phenyl)-thionophosphorsäureester,
O-Ethyl-S-n-propyl-O-(2,4-dichlor-phenyl)-dithiophosphorsäureester,
O,O-Dimethyl-O-(3-methyl-4-methylthio-phenyl)-thionophosphorsäureester,
O-Ethyl-S-n-propyl-O-(4-methylthio-phenyl)-dithiophosphorsäureester,
O,O-Dimethyl-S-(3,4-dihydro-4-oxo-1,2,3-benzotriazin-3-yl-methyl)-dithiophosphorsäureester,

O,O-Dimethyl-S-(2-ethylthio-ethyl)-thiol-phosphorsäureester,
O,O-Dimethyl-S-(methylaminocarbonyl-methyl)-thiolphosphorsäureester,
O,O-Diethyl-O-(chinoxal-2-yl)-thionophosphorsäureester
O,O-Diethyl-O-(2-iso-propyl-6-methyl-pyrimidin-4-yl)-thionophosphorsäureester,
(O,O-Diethyl -thionophosphoryl)-α-oximino-phenylessigsäurenitril,
O,O-Diethyl-O-(3-chlor-4-methyl-cumarin-7-yl)-thiono-phosphorsäureester und
O,O-Dimethyl-2,2,2-trichlor-1-hydroxy-ethan-phosphonsäureester.

Überraschenderweise ist die insektizide und/oder akarizide Wirkung der erfindungsgemäßen Wirkstoffkombination wesentlich höher als die Wirkung der Einzelkomponenten und auch erheblich höher als die Summe der Wirkungen der Einzelkomponenten.

Die für die erfindungsgemäßen Wirkstoffkombinationen zu verwendenden Amido-thiono-phosphorsäurephenylester sind durch Formel (I) definiert. Vorzugsweise stehen darin

R für geradkettiges oder verzweigtes Alkyl mit 1 bis 4 Kohlenstoffatomen,

$R^1$ und $R^2$ unabhängig von einander für Wasserstoff oder geradkettiges oder verzweigtes Alkyl mit 1 bis 4 Kohlenstoffatomen und

$R^3$ für geradkettiges oder verzweigtes Alkyl mit 2 bis 6 Kohlenstoffatomen oder Cyclohexyl.

Als Beispiele für die Verbindungen der Formel (I) seien genannt:

O-Methyl- und O-Ethyl-O-(2-iso-propoxy-carbonyl-phenyl)-thionophosphorsäureesteramid,
O-Methyl- und O-Ethyl-O-(2-iso-propoxy-carbonyl-phenyl)-N-methyl-thionophosphorsäureesteramid,
O-Methyl- und O-Ethyl-O-(2-iso-propoxy-carbonyl-phenyl)-N-iso-propyl-thionophosphorsäureesteramid und
O-Methyl- und O-Ethyl-O-(2-sek.-butoxy-carbonyl-phenyl)-thionophosphorsäuresteramid.

Verbindungen der Formel (I) sind bekannt (vergleiche die DE-OS 1 668 047).

Wie bereits erwähnt, zeigen die neuen Wirkstoffkombinationen aus Amido-thiono-phosphorsäure-phenylestern der Formel (I) und Carbaminsäureestern und/oder Phosphorsäureestern bzw. Phosphonsäureestern eine erhebliche Wirkungssteigerung gegenüber den Einzelwirkstoffen und auch gegenüber deren Summe.

Sie können daher mit Erfolg im Pflanzenschutz zur Bekämpfung tierischer Schädlinge, insbesondere von Insekten und Spinnmilben, verwendet werden.

In der Wirkstoffkombination liegt das Gewichtsverhältnis von Amido-thiono-phosphorsäure-phenylester zu den übrigen Wirkstoffen vorzugsweise zwischen 0,1:10 und 10:0,1.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen.Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.



BAD ORIGINAL

Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp.,Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp. Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp.,

Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..
Aus der Ordnung der Arachnida z.B. Scorpio maurus, Latrodectus mactans.
Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff

und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo- und Metallphthalocyanin-farbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Anwendung der erfindungsgemäßen Wirkstoffe erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,01 und 10 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Beispiel A

Myzus-Test / resistent

Lösungsmittel: 3 Gewichtsteile Aceton
Emulgator: 1 Gewichtsteile Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea), die stark von der Pfirsichblattlaus (Myzus persicae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Blattläuse abgetötet wurden; 0 % bedeutet, daß keine Blattläuse abgetötet wurden.

Bei diesem Test zeigen z.B. die folgenden Wirkstoffkombinationen überlegene Wirksamkeit gegenüber den Einzelkomponenten dieser Kombinationen.

## Tabelle
(pflanzenschädigende Insekten)

Myzus persicae resistent

| Wirkstoffe | Wirkstoffkonzentration in % | Abtötungsgrad in % nach 1 Tag |
|---|---|---|
| 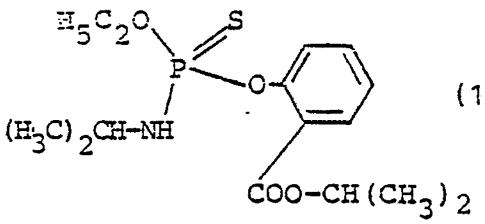 (1) | 0,004 | 0 |
| 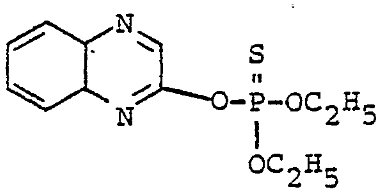 (2) | 0,004<br>0,0008 | 60<br>0 |
| (1) + (2) | 0,004<br>+ 0,004 | 100 |
| (1) + (2) | 0,0008<br>+ 0,0008 | 50 |
| 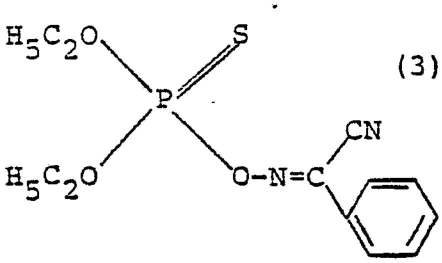 (3) | 0,004 | 0 |

**Tabelle**

(pflanzenschädigende Insekten)

Myzus persicae resistent

| Wirkstoffe | Wirkstoffkonzentration in % | Abtötungsgrad in % nach 1 Tag |
|---|---|---|
| (1) + (3) | 0,004 + 0,004 | 90 |
| 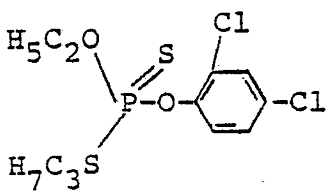 (4) | 0,004 | 40 |
| | 0,0008 | 0 |
| (1) + (4) | 0,004 + 0,004 | 98 |
| (1) + (4) | 0,0008 + 0,0008 | 35 |
| 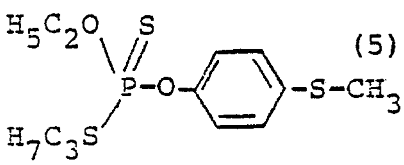 (5) | 0,004 | 0 |
| (1) + (5) | 0,004 + 0,004 | 95 |

## Tabelle

(pflanzenschädigende Insekten)

Myzus persicae resistent

| Wirkstoffe | Wirkstoffkonzentration in % | Abtötungsgrad in % nach 1 Tag |
|---|---|---|
| 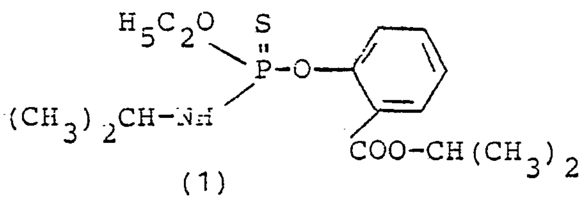 (1) | 0,004 | 0 |
| 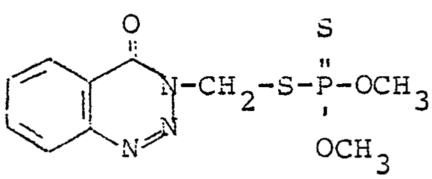 (2) | 0,004 | 0 |
| (2) + (1) | 0,004 + 0,004 | 100 |
| 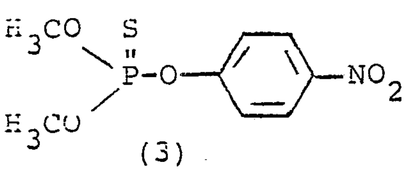 (3) | 0,004 | 0 |
| (3) + (1) | 0,004 + 0,004 | 100 |
| 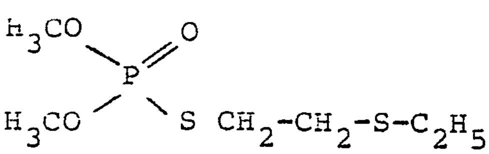 (4) | 0,004 | 0 |

BAD ORIGINAL

0021390

Tabelle (Fortsetzung)

(pflanzenschädigende Insekten)

Myzus persicae resisten

| Wirkstoffe | Wirkstoffkonzentration in % | Abtötungsgrad in % nach 1 Tag |
|---|---|---|
| (4) + (1) | 0,004<br>+ 0,004 | 95 |
| 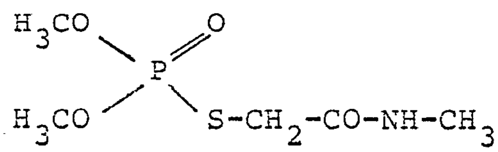<br>(5) | 0,004 | 0 |
| (5) + (1) | 0,004<br>+ 0,004 | 95 |
| 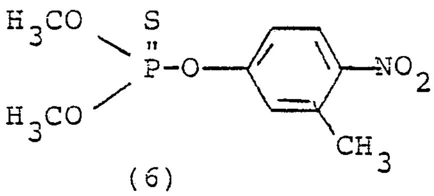<br>(6) | 0,004 | 0 |
| (6) + (1) | 0,004<br>+ 0,004 | 95 |
| 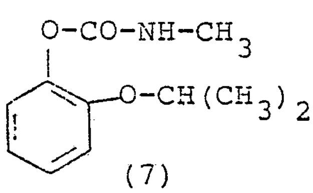<br>(7) | 0,004 | 25 |
| (7) + (1) | 0,004<br>+ 0,004 | 90 |



BAD ORIGINAL

Patentansprüche

1. Schädlingsbekämpfungsmittel, gekennzeichnet durch einen Gehalt an einer Wirkstoffkombination, bestehend aus Amido-thiono-phosphorsäure-phenylester der Formel I

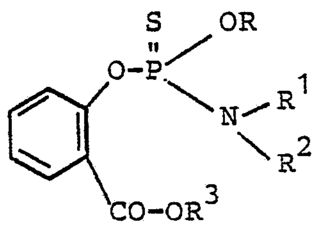

(I)

in welcher

R für Alkyl steht,

$R^1$ und $R^2$ gleich oder verschieden sind und einzeln für Wasserstoff oder Alkyl stehen, und

$R^3$ für Alkyl oder Cycloalkyl steht,

und

A) Carbaminsäureestern und/oder

B) Phosphorsäureestern bzw. Phosphonsäureestern.

2. Schädlingsbekämpfungsmittel nach Anspruch 1, gekennzeichnet durch einen Gehalt an einer Wirkstoffkombination aus Verbindungen der Formel (I) und

A) Carbaminsäureestern der Formel II

$$R^1-O-CO-N\begin{matrix} \diagup R^2 \\ \diagdown R^3 \end{matrix} \qquad (II)$$

in welcher

$R^1$ für Aryl, einen heterocyclischen Rest oder für einen Oximrest steht, welche gegebenenfalls substituiert sind

$R^2$ für Wasserstoff oder einen Alkylrest mit 1 bis 4 Kohlenstoffatomen steht und

$R^3$ für Alkyl, Alkylcarbonyl mit 1 bis 6 Kohlenstoffatomen im Alkylrest, der gegebenenfalls durch Hydroxy oder Methylthio substituiert ist, oder den Rest -S-Z steht, wobei

Z für einen gegebenenfalls durch Halogen substituierten aliphatischen Rest mit 1 bis 4 Kohlenstoffatomen, insbesondere für $CCl_3$ und $CF_3$ sowie für gegebenenfalls durch Cyano, Halogen, Methyl, Trihalogenmethyl, Trifluormethylthio oder Nitro substituierten Arylrest, insbesondere Phenyl, oder für Methoxycarbonyl oder für den Rest $-W-SO_2-\underset{R^2}{\overset{}{N}}-$ steht, wobei

W für Alkyl, Halogenalkyl oder Alkylamino, Dialkylamino oder einen gegebenenfalls durch Halogen, Trihalogenmethyl, Nitril, Methyl oder Nitro substituierten Arylrest steht, und/oder

B) Phosphorsäureestern bzw. Phosphonsäureestern der Formel III

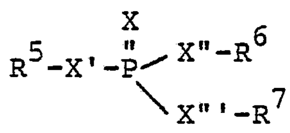

(III)

in welcher

X, X' und X" unabhängig voneinander für Sauerstoff oder Schwefel stehen,

X"' für Sauerstoff, Schwefel oder eine direkte Bindung zwischen dem zentralen Phosphoratom und $R^7$ steht,

$R^5$ und $R^6$ gleich oder verschieden sind und einzeln für gegebenenfalls substituiertes Alkyl oder Aryl stehen, und

$R^7$ für gegebenenfalls substituiertes Aryl, Alkyl, Heteroaryl, Aralkyl, Alkenyl, für einen Oximrest oder für den gleichen Rest, an den es gebunden ist, steht.

3. Schädlingsbekämpfungsmittel nach Anspruch 2, dadurch gekennzeichnet, daß es eine Verbindung der Formel (I)

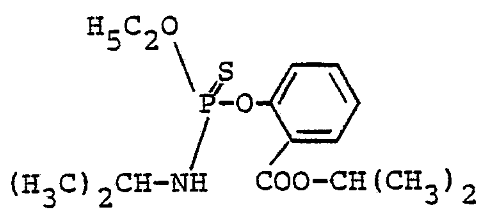

enthält.

4. Insektizide und akarizide Mittel gemäß Anspruch 1, dadurch gekennzeichnet, daß in der Wirkstoffkombination das Gewichtsverhältnis von Amido-thiono-phosphorsäure-phenylester zu den übrigen Wirkstoffen zwischen 0,1:10 und 10:0,1 liegt.

5. Verfahren zur Bekämpfung von Insekten und Spinntieren dadurch gekennzeichnet, daß man eine Wirkstoffkombination gemäß Anspruch 1 auf Insekten und Spinnentieren und/oder ihren Lebensraum einwirken läßt.

6. Verwendung von Wirkstoffkombinationen gemäß Anspruch 1 zur Bekämpfung von Insekten und Spinnentieren.

7. Verfahren zur Herstellung von insektiziden und akariziden Mitteln, dadurch gekennzeichnet, daß man eine Wirkstoffkombination gemäß Anspruch 1 mit Streckmitteln und/oder oberflächenaktiven Mitteln vermischt.